# EUROPÄISCHE PATENTSCHRIFT

(11) **EP 2 250 857 B1**
(45) Veröffentlichungstag und Bekanntmachung des Hinweises auf die Patenterteilung: **22.06.2011**
(21) Anmeldenummer: 08872776.3
(22) Anmeldetag: 19.12.2008
(51) Int. Cl.: H05B 3/48, G01F 23/22

(54) **ELEKTRISCHES HEIZELEMENT**
ELECTRICAL HEATING ELEMENT
ÉLÉMENT CHAUFFANT ÉLECTRIQUE

(30) Priorität: 26.02.2008 DE 102008011193
(43) Veröffentlichungstag der Anmeldung: 17.11.2010
(73) Patentinhaber: Areva NP GmbH, 91052 Erlangen (DE)
(72) Erfinder: KAERCHER, Sacha, 90000 Belfort (FR); VOGT, Wolfgang, 63796 Kahl (DE); PFLEGER, Stefan, 63755 Alzenau (DE); HARFST, Wilfried, 55130 Mainz (DE)
(74) Vertreter: Hafner-Tergau-Walkenhorst
(86) Internationale Anmeldenummer: PCT/EP2008/010970
(87) Internationale Veröffentlichungsnummer: WO 2009/106119

(56) Entgegenhaltungen:
- US-A- 4 592 230
- US-A- 4 603 580
- US-A- 4 805 454
- US-A- 4 915 508

## Beschreibung

Die vorliegende Erfindung betrifft eine Vorrichtung und ein Verfahren zur Füllstandsmessung in einem Flüssikgkeitsbehälter mit einer Anzahl von Thermoelementen und mit einem elektrischen Heizelement.

Messvorrichtungen und Füllstandssonden, bei denen anhand der von einem beheizten Thermoelement erzeugten Thermospannung auf die Füllstandshöhe in einem Flüssigkeitsbehälter geschlossen wird, werden insbesondere in Kernkraftwerken eingesetzt, da sie gegenüber auf anderen Messprinzipien beruhenden Messvorrichtungen vergleichsweise unempfindlich gegen radioaktive Strahlung sind und daher auch bei einem Störfall mit gegebenenfalls erhöhten Strahlungswerten weiterhin zuverlässig arbeiten können. Derartige Messvorrichtungen finden insbesondere im Reaktordruckbehälter eines Druckwasserreaktors Anwendung, um dort die Pegelhöhe der durch den Primärkreislauf der Kraftwerksanlage strömenden Kühlflüssigkeit oberhalb der Brennelemente zu überwachen.

Das Messprinzip nutzt die unterschiedlichen Wärmeübergangscharakteristiken aus, die beim Übergang der Wärme von einem Heizelement auf ein das Heizelement umgebendes flüssiges Kühlmittel einerseits und auf ein gas- oder dampfförmiges Medium andererseits auftreten. Solange das Heizelement von flüssigem Kühlmedium umgeben ist, wird die von ihm erzeugte Wärme rasch abgeführt, so dass selbst in seiner unmittelbaren Umgebung die Temperatur nur unwesentlich oberhalb derjenigen Umgebungstemperatur liegt, die sich im unbeheizten Falle einstellen würde. Tritt nun beispielsweise während des regulären Reaktorbetriebs oder auch bei einem Reaktorstörfall die Situation ein, dass betriebsbedingt oder aufgrund eines Druckverlustes im Primärkreislauf der Flüssigkeitspegel im Reaktorbehälter unter die Höhe des Heizelementes sinkt, dieses mithin von dampfförmigem Kühlmittel umgeben ist, so verschlechtern sich die Wärmeübergangseigenschaften. Dies hat zur Folge, dass die Temperatur in der Umgebung des Heizelementes ansteigt, was sich durch ein benachbart zum Heizelement angebrachtes Thermometer oder einen Temperaturmessfühler nachweisen lässt. Aufgrund ihrer zuverlässigen und robusten Betriebsweise kommen als Temperaturmessfühler in der Regel Thermoelemente zum Einsatz, die eine im Wesentlichen der Temperatur proportionale Thermospannung liefern.

Üblicherweise ist eine Mehrzahl von beheizten Thermoelementen in zumeist regelmäßigen Abständen voneinander an einem stab- oder röhrenförmigen Träger oder an einem länglichen Messrohr angeordnet, das in die hinsichtlich ihres Pegelstandes zu überwachende Flüssigkeit eintaucht, und in dessen Inneren auch die zur Stromversorgung der Heizelemente und die zur Signalübermittlung an eine externe Auswerteeinheit notwendigen Versorgungs- und Signalleitungen geführt sind. Die in verschiedenen Höhen angeordneten Sensoren oder Messpositionen ermöglichen somit eine digitale, räumlich diskrete Anzeige der Füllstandshöhe im Behälter, wobei die (örtliche) Auflösung von der Anzahl der Thermosensoren pro Höhenabschnitt abhängt. Eine Messvorrichtung dieser Art ist beispielsweise aus der RU 2153712 C1 bekannt. Neben den als primären Signalgebem wirksamen beheizten Thermoelementen ist dabei auch noch eine Mehrzahl von unbeheizten Thermoelementen im Inneren des Messrohres angeordnet, die ein dem jeweiligen Primärsignal zugeordnetes Referenzsignal liefern. Auf diese Weise lässt sich bei der Auswertung der Temperaturinformationen und der daraus abgeleiteten Ermittlung der Füllstandshöhe auch eine zeitliche Variation der Flüssigkeits- oder Umgebungstemperatur berücksichtigen. Ohne eine derartige Maßnahme könnte beispielsweise ein Anstieg oder eine Senkung der Flüssigkeitstemperatur fälschlicherweise als Variation der Füllhöhe gedeutet oder eine tatsächliche Veränderung der Füllhöhe durch eine gleichzeitige Temperaturänderung der Flüssigkeit "verdeckt" werden.

Das Dokument US 4 805 454 A offenbart eine Vorrichtung zur Füllstandsmessung mit einem eine elektrische Leitung aufweisenden Heizelement und Mittel, die die Temperatur in der Umgebung des Heizelements bestimmt.

Die Ermittlung möglichst exakter Füllstandswerte hängt von der Messgenauigkeit der Thermoelemente, jedoch auch von der Reproduzierbarkeit der von den Heizelementen gelieferten Temperaturen ab. Die bekannten Heizelemente zeigen üblicherweise keine exakt linearen Zusammenhänge zwischen dem angelegten Heizstrom und der erzeugten Temperatur, insbesondere über die gesamte Länge des Heizelementes. Der Erfindung liegt die Aufgabe zu Grunde, eine Vorrichtung und ein Verfahren der eingangs genannten Art anzugeben, welche die Temperatur der im Flüssigkeitsbehälter vorhandenen Flüssigkeit auf einfache Weise bei der Messung berücksichtigen.

Diese Aufgabe wird in Bezug auf die Vorrichtung erfindungsgemäß gelöst durch die Merkmale des Anspruchs 1.

Die erfindungsgemäße Vorrichtung umfasst ein vorzugsweise stabförmiges elektrisches Heizelement mit einer elektrisch leitenden Umhüllung und einer darin eingebetteten elektrischen Leitung, die wenigstens zwei Leitungsabschnitte mit jeweils unterschiedlichen elektrischen Eigenschaften und/oder thermischen Leitfähigkeiten aufweist. Die wenigstens eine elektrische Leitung steht in thermischem Kontakt mit der Umhüllung, vorzugsweise am Ende des stabförmigen Heizelements, um einen guten Wärmeübergang zwischen der mit Heizstrom beaufschlagbaren Leitung und der Umhüllung zu ermöglichen. Dieses Heizelement kann insbesondere in einer Vorrichtung zur Füllstandsmessung in einem Flüssigkeitsbehälter, insbesondere in einem Reaktorbehälter einer kerntechnischen Anlage, verwendet werden. Die wenigstens zwei metallischen Leitungsabschnitte mit jeweils unterschiedlichen elektrischen und/oder thermischen Eigenschaften ermöglichen die exakte Definition der thermischen und elektrischen Eigenschaften und insbesondere die exakte Steuerung des an die mit dem Heizelement koppelbaren Thermoelemente übertragbaren Wärmestroms in Abhängigkeit von der Umgebungstemperatur, insbesondere der Temperatur des Kühlmediums.

Eine bevorzugte Ausgestaltung der Erfindung sieht vor, dass die wenigstens zwei Leitungsabschnitte mit unterschiedlichen thermischen Leitfähigkeiten jeweils unmittelbar aneinander grenzen bzw. aufeinander folgen. Auf diese Weise kann die exakte Lokalisierung des Messortes bzw. der Koppelstelle zwischen dem Heizelement und dem damit koppelbaren Thermoelement gewährleistet werden. Je nach Art des Leitungsabschnittes und dessen Entfernung zum jeweils anderen Leitungsabschnitt mit anderen Eigenschaften kann die Koppelstelle gewählt werden, um die gewünschte Messgenauigkeit zu erzielen.

Die unterschiedlichen thermischen und/oder elektrischen Eigenschaften der verschiedenartigen Leitungsabschnitte des Heizelements können insbesondere erzielt werden, indem die wenigstens zwei unterschiedlichen Leitungsabschnitte jeweils unterschiedliche Materialzusammensetzungen des Metalls aufweisen. So kann ein erster Leitungsabschnitt des Heizelements durch ein Metall mit reduzierter thermischer Leitfähigkeit gebildet ist. Dieser erste Leitungsabschnitt bildet somit einen sog. "kalten Teil" des Heizelements. Zur Erzielung der gewünschten Eigenschaften des ersten Leitungsabschnitts eignet sich bspw. Nickel oder eine Nickellegierung mit überwiegenden Nickelanteilen. Dieser sog. kalte Teil des Heizelements kann somit einen relativ großen Messbereich mit starken Signaländerungen zeigen. Bei Verwendung von Nickel für den ersten Leitungsabschnitt mit seiner relativ ausgeprägten Abhängigkeit des elektrischen Widerstandes von der Temperatur kann der Widerstandswert bei einer Temperatur von 30°C bspw. ca. 10 Ohm betragen, während der Widerstandswert bei einer Temperatur von 360°C ca. 50 Ohm betragen kann. Da diese Widerstandsänderungen mit annähernd linearer Kennlinie verlaufen, sind exakt reproduzierbare Messwerte in Abhängigkeit von der Temperatur des Kühlmediums bzw. des umgebenden Mediums realisierbar.

Vorzugsweise ist wenigstens ein zweiter Leitungsabschnitt, ein sog. "heißer Teil" des Heizelements, durch ein Metall mit hoher thermischer Leitfähigkeit gebildet. Hierfür eignet sich insbesondere ein Metall wie Nickelchrom (NiCr). Wahlweise kann nur ein solcher zweiter Leitungsabschnitt vorgesehen sein. Es können jedoch auch mehrere "heiße Teile" im Heizelement vorgesehen sein, die bspw. aus Nickelchrom bestehen. Das gewählte Material muss einen möglichst hohen Wärmestrom, d.h. einen möglichst hohen elektrischen Widerstand aufweisen. Um zu vermeiden, dass die lineare Widerstandsänderung des Heizelements über die Temperaturveränderung zum Teil auf der im "heißen Teil" des Heizelements herrschenden Temperatur beruht, weist das Material des wenigstens einen zweiten Leitungsabschnitts eine möglichst geringe Abhängigkeit des Widerstands von der Temperatur auf. Chromnickel liefert diese gewünschte Eigenschaft.

Das Heizelement kann weiterhin eine metallische äußere Umhüllung, insbesondere eine Umhüllung aus Edelstahl aufweisen. Diese sorgt für die Medienresistenz des Heizelements und für eine lange Lebensdauer. Innerhalb dieser äußeren Umhüllung kann das Heizelement in einem Isolator eingebettet sein. Als Material für den Isolator eignet sich insbesondere mineralisches Material wie bspw. Magnesiumoxid (MgO). Beim Einsatz des erfindungsgemäßen Heizelements in einem Füllstandsanzeiger wird der obere Teil des Heizelements in einem oberen Abschnitt des Mediums bzw. des Kühlwassers platziert. Auf diese Weise kann mit diesem oberen Abschnitt des Heizelements ein relativ großer axialer Temperaturgradient abgedeckt werden. Zur Vermeidung von Messungenauigkeiten bei der Erfassung der Temperatur des Mediums, weist dieser Abschnitt des Heizelements ein Material auf, dessen Widerstand nur wenig von der Temperatur abhängt. Darüber hinaus kann dieser Abschnitt des Heizelements einen größeren Durchmesser aufweisen, wodurch eine noch exaktere Einstellbarkeit der linearen Widerstandsänderungen des Heizelements ermöglicht ist, da damit der Beitrag des oberen Abschnitts zur gesamten Widerstandsänderung reduziert ist.

Die vorliegende Erfindung umfasst weiterhin eine Vorrichtung zur Füllstandsmessung in einem Flüssigkeitsbehälter, insbesondere in einem Reaktorbehälter einer kerntechnischen Anlage, mit einer Mehrzahl von länglichen, voneinander beabstandeten Messrohren, wobei jedes Messrohr eine Anzahl von in Längsrichtung verteilt angeordneten Thermoelementen aufweist, und wobei zumindest ein Thermoelement ein Heizelement gemäß einer der zuvor beschriebenen Ausführungsformen aufweist. Die Vorrichtung ist insbesondere zur Füllstandsüberwachung geeignet und damit in vorteilhafter Weise als Bestandteil der Sicherheitseinrichtung eines Kernreaktors einsetzbar. Die Erfindung umfasst somit auch eine kerntechnische Anlage mit einer derartigen Vorrichtung zur Füllstandsüberwachung, die wenigstens ein Heizelement gemäß einer der zuvor beschriebenen Ausführungsvarianten aufweist. Selbstverständlich sind auch andere Einsatzgebiete für das Heizelement denkbar, bei denen es auf die Genauigkeit der gelieferten Messwerte ankommt.

Zusammengefasst ist erfindungsgemäß ein Heizelement realisiert, dessen stromführender Leiter ("Heizdraht") zumindest zwei unterschiedliche Zonen aufweist, nämlich eine "heiße" Heizzone mit vergleichsweise hoher Heizleistung, so dass während des Betriebs in diesem Bereich zu Messzwecken eine lokale Wärmeübertragung auf ein umliegendes Kühlmedium erfolgt, und - räumlich von der Heizzone getrennt - eine im Vergleich dazu kältere Zone mit vernachlässigbarer Heizleistung, die durch den thermischen Kontakt mit dem umliegenden Kühlmedium im Wesentlichen die Temperatur des Kühlmediums in diesem Abschnitt annimmt. Aufgrund der räumlichen Trennung der Heizzone und der unbeheizten Zone ist die Temperatur des umliegenden Kühlmediums im Bereich der unbeheizten Zone nicht weiter durch den lokalen Beheizungsvorgang im Bereich der Heizzone beeinflusst oder verfälscht.

Durch die lokale Beheizung kann in Kombination mit einem in der Nähe der Heizzone angeordneten Temperaturmessfühler, insbesondere einem Thermoelement, die Qualität des Wärmeübergangs vom Heizelement auf das umgebende Kühlmedium messtechnisch erfasst und somit auf den Aggregatzustand des Kühlmediums (flüssig oder gasförmig) in diesem Bereich geschlossen werden. Die Heizzone bildet zusammen mit dem zugeordneten Thermoelement gewissermaßen eine Sonde für die Wärmeübergangsmessung und damit letztlich auch für eine Füllstandsmessung. Es kann somit entschieden werden, ob der Flüssigkeitsspiegel unterhalb oder oberhalb der Heizzone liegt.

Im Bereich der Heizzone besteht der Heizdraht erfindungsgemäß aus einem Material mit relativ hohem spezifischen (elektrischen) Widerstand und mit vergleichsweise geringer Temperaturabhängigkeit des spezifischen Widerstandes, z.B. aus Nickelchrom (NiCr). Damit ist der Gesamtwiderstand des die Heizzone bildenden Heizdrahtabschnitts im Wesentlichen von der sich heizungsbedingt einstellenden momentanen Materialtemperatur unabhängig. Im Gegensatz dazu besteht der Draht bzw. Leiter im Bereich der unbeheizten Zone erfindungsgemäß aus einem Material mit vergleichsweise starker, vorzugsweise linearer Abhängigkeit des spezifischen Widerstandes von der Materialtemperatur, die in diesem Bereich - wie oben bereits ausgeführt - im Wesentlichen durch die Umgebungstemperatur, d.h. die Temperatur des umgebenden Kühlmediums, definiert ist. Ein geeignetes Material ist z.B. Nickel (Ni). Damit ist die Temperaturabhängigkeit des Gesamtwiderstandes des Heizdrahtes, der sich additiv aus den Widerständen der seriell geschalteten Heizzone und der unbeheizten Zone zusammensetzt, im Wesentlichen ausschließlich durch die Temperaturabhängigkeit im Bereich der unbeheizten Zone bestimmt.

Idealerweise nimmt durch diese Konstruktion der Gesamtwiderstand des Heizdrahtes linear mit der Temperatur des die Anordnung umgebenden Kühlmediums zu, und zwar unbeeinflusst durch die im Bereich der Heizzone stattfindenden lokalen Beheizungsvorgänge, die dort - lokal beschränkt - ggf. zu abweichenden und zeitlich variierenden Temperaturen führen. Dieser Gesamtwiderstand, der messtechnisch einfach erfassbar ist, ist somit eine geeignete Kenngröße zur Bestimmung der globalen Kühlmitteltemperatur. Beispielsweise ist es möglich, einmal in der Art einer Eichmessung eine Temperatur-Widerstand-Kennlinie aufzunehmen, auf die im Folgenden zur Bestimmung der aktuellen Kühlmitteltemperatur anhand des aktuell gemessenen Widerstandswertes zurückgegriffen wird. Auf einen separaten Temperaturmessfühler für die Bestimmung der Kühlmitteltemperatur kann somit ggf. verzichtet werden, bzw. es ist eine zu einem derartigen Temperaturmessfühler redundante Messung mit diversitärem Messprinzip möglich. Auf der Grundlage derartiger Messwerte für die Kühlmitteltemperatur kann beispielsweise eine temperaturabhängige Heizstromregelung für das Heizelement erfolgen, um etwa unerwünschte sekundäre Effekte eines mit der Temperatur variierenden Wärmeübergangskoeffizienten für den Wärmeübergang von der Heizzone des Heizelementes auf das Kühlmedium zu kompensieren.

Neben der bereits genannten Heizzone und der "temperatursensitiven" unbeheizten Zone kann der elektrische Leiter des Heizelements auch noch weitere Abschnitte umfassen, die zweckmäßigerweise aus einem Material mit möglichst geringer Temperaturabhängigkeit des spezifischen Widerstandes bestehen und/oder durch entsprechend groß dimensionierte Leitungsquerschnitte nur wenig zum Gesamtwiderstand des Drahtes oder der Leitung beitragen und somit nicht im oben erläuterten Sinne temperatursensitiv sind. Damit kann der für die Temperarmessung wirksame Leitungsabschnitt, sprich die Temperaturmesszone, und dessen räumliche Lage innerhalb der Gesamtanordnung präzise durch die geeignete Positionierung der Materialübergänge festgelegt werden.

Ein Ausführungsbeispiel der Erfindung wird anhand einer Zeichnung näher erläutert. Darin zeigen:
- Fig. 1: eine schematische Darstellung eines erfindungsgemäßen Heizelements,
- Fig. 2: einen schematischen Längsschnitt einer ersten Variante des Heizelements, und
- Fig. 3: einen schematischen Längsschnitt einer zweiten Variante des Heizelements.

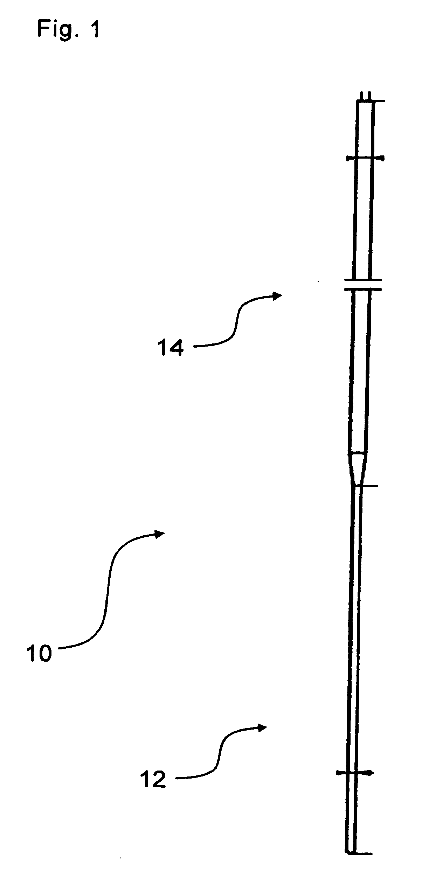

Die schematische Darstellung der Fig. 1 zeigt ein Ausführungsbeispiel eines stabförmigen elektrischen Heizelements 10, das im länglichen unteren Abschnitt 12 einen konstanten Durchmesser aufweist, der geringer ist als der ebenfalls konstante Durchmesser des oberen Abschnittes 14. Der obere Abschnitt 14 des Heizelements 10 kann bspw. einen Durchmesser von ca. 2 mm aufweisen, während der untere Abschnitt 12 einen Durchmesser von ca. 1 mm und eine Länge von ca. 500 mm aufweisen kann. Die Länge des oberen Abschnitts kann variieren, je nach Einsatzzweck und Ausführungsvariante des Heizelements 10. Der größere Durchmesser des oberen Abschnitts 14 ermöglicht eine verbesserte Einstellbarkeit der Parameter des Heizelements 10, da damit der Beitrag des oberen Abschnitts 14 zur gesamten Widerstandsänderung reduziert ist, was anhand der folgenden Figuren noch näher erläutert wird.

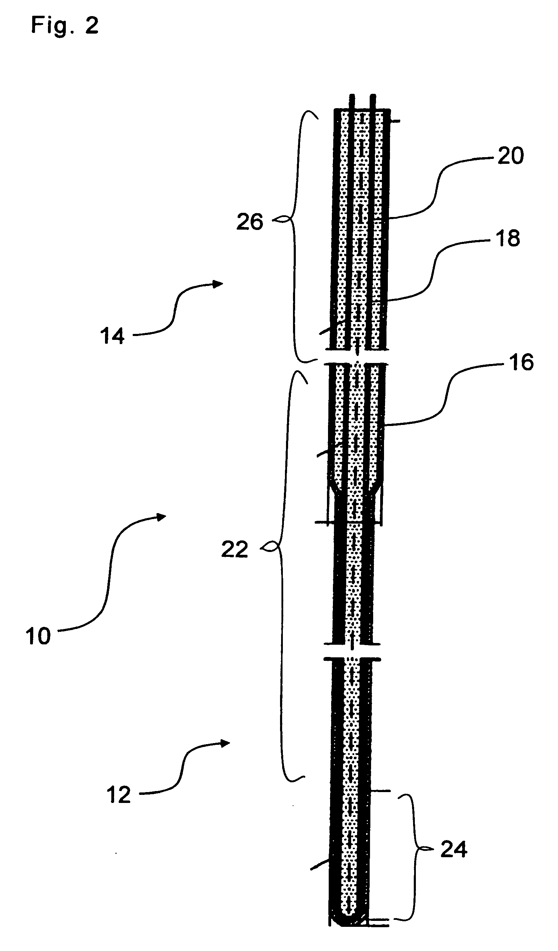

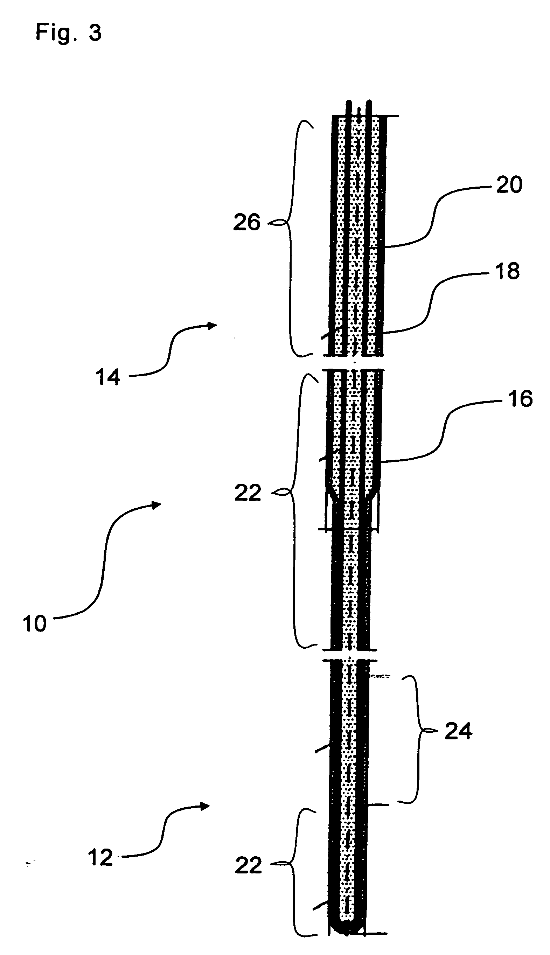

Die schematischen Darstellungen der Fig. 2 und der Fig. 3 zeigen jeweils einen Längsschnitt einer ersten bzw. zweiten Variante des Heizelements 10. Innerhalb einer metallischen Umhüllung 16, die oben offen und unten geschlossen ist, so dass sie insgesamt die Gestalt eines länglichen Gefäßes aufweist, ist eine U-förmige Leitung 18 eingebettet, wobei die Zwischenräume durch einen Isolator 20 aus Magnesiumoxid ausgefüllt sind. Im unteren Abschnitt 12 des Heizelements 10 besteht ein leitender Kontakt zwischen der Leitung 18 und der Umhüllung 16. Die Umhüllung 16 kann insbesondere aus einem Edelstahlmaterial (z.B. 1.4306, 1.4435 oder 2.4816) bestehen, während die Leitung 18 aus unterschiedlichen Leitungsabschnitten gebildet wird, die aus unterschiedlichen Metallen bestehen.

Ein erster Leitungsabschnitt 22 wird durch ein Metall mit relativ geringer thermischer Leitfähigkeit gebildet. Hierfür eignet sich insbesondere Nickel bzw. eine Nickellegierung. Aufgrund der geringen thermischen Leitfähigkeit kann dieser erste Leitungsabschnitt 22 auch als "kalter Teil" des Heizelements 10 bezeichnet werden. Ein zweiter Leitungsabschnitt 24 wird durch ein Metall mit hoher thermischer Leitfähigkeit gebildet, wofür sich insbesondere Nickelchrom eignet. Dieser zweite Leitungsabschnitt 24 bildet die eigentliche Heizzone des Heizelements. Aufgrund der hohen thermischen Leitfähigkeit kann dieser zweite Leitungsabschnitt 24 auch als "heißer Teil" des Heizelements 10 bezeichnet werden. Sowohl der erste Leitungsabschnitt 22 als auch der zweite Leitungsabschnitt 24 sind im unteren Abschnitt 12 des Heizelements 10 mit geringerem Durchmesser angeordnet. Im oberen Abschnitt 14 mit größerem Durchmesser befindet sich ein dritter Leitungsabschnitt 26, der bspw. aus Kupfer bestehen kann.

Die beiden Ausführungsvarianten der Figuren 2 und 3 unterscheiden sich durch die jeweils unterschiedliche Anordnung des zweiten Leitungsabschnittes 24 in unterschiedlichen Höhen. Während der die eigentliche Heizzone bildende zweite Leitungsabschnitt 24 bei der ersten Variante gemäß Fig. 2 am unteren Ende des unteren Abschnitts 12 angeordnet ist und bis zur unteren Stirnseite der Umhüllung 16 reicht, befindet sich die Heizzone und damit der zweite Leitungsabschnitt 24 bei der zweiten Variante gemäß Fig. 3 in einem mittleren Bereich des unteren Abschnitts 12. Der untere Bereich des unteren Abschnitts 12 wird wiederum von einem Leitungsabschnitt der ersten Art aus Nickel bzw. einer Nickellegierung ausgefüllt. Dieser erste Leitungsabschnitt 22 reicht bis zur unteren Stirnseite der Umhüllung 16. Oberhalb des zweiten Leitungsabschnittes 24 aus Chromnickel befindet sich wiederum ein weiterer Leitungsabschnitt 22 der ersten Art aus Nickel. Die Länge der Heizzone bzw. des zweiten Leitungsabschnittes 24 kann bspw. 50 mm betragen.

Anhand der Figuren 2 und 3 wird deutlich, dass die Übergänge zwischen den unterschiedlichen Metallen der verschiedenen Leitungsabschnitte 22, 24 und 26 keine Unterbrechungen oder Absätze aufweisen. Die Verbindungen können bspw. durch Verschweißen oder Verlöten hergestellt werden. Um ein Heizelement mit möglichst exakt reproduzierbaren elektrischen und thermischen Eigenschaften zu erhalten, ist es wichtig, dass die beiden Schenkel der U-förmigen Leitung 18 weitestgehend symmetrisch aufgebaut sind, dass also die ersten und zweiten Leitungsabschnitte 22 und 24 an jedem der beiden Schenkel jeweils exakt gleich lang und in gleicher Höhe positioniert sind.

### Bezugszeichenliste

- 10: elektrisches Heizelement
- 12: unterer Abschnitt
- 14: oberer Abschnitt
- 16: Umhüllung
- 18: Leitung
- 20: Isolator
- 22: erster Leitungsabschnitt
- 24: zweiter Leitungsabschnitt
- 26: dritter Leitungsabschnitt

## Patentansprüche

1. Vorrichtung zur Füllstandsmessung in einem Flüssigkeitsbehälter
● mit einer Anzahl von Thermoelementen,
● mit einem eine elektrische Leitung aufweisenden Heizelement, wobei die elektrische Leitung wenigstens einen eine Heizzone bildenden ersten Leitungsabschnitt und einen eine Kaltzone bildenden zweiten Leitungsabschnitt aufweist, wobei der erste Leitungsabschnitt einen wesentlich höheren spezifischen Widerstand besitzt als der zweite Leitungsabschnitt, und wobei die Temperaturabhängigkeit des spezifischen Widerstandes im zweiten Leitungsabschnitt wesentlich größer ist als im ersten Leitungsabschnitt,
● mit Mitteln zur Messung des Gesamtwiderstandes der elektrischen Leitung,
● und mit Mitteln, die anhand des gemessenen Gesamtwiderstandes die Temperatur in der Umgebung des zweiten Leitungsabschnitts bestimmen.

2. Vorrichtung nach Anspruch 1, wobei der spezifische Widerstand des zweiten Leitungsabschnitts näherungsweise linear von der Temperatur abhängt.

3. Vorrichtung nach Anspruch 1 oder 2, wobei der erste Leitungsabschnitt (22) durch Nickelchrom (NiCr) gebildet ist.

4. Vorrichtung nach einem der Ansprüche 1 bis 3, wobei der zweite Leitungsabschnitt (24) durch Nickel (Ni) oder durch eine Nickellegierung mit überwiegenden Nickelanteilen gebildet ist.

5. Vorrichtung nach einem der Ansprüche 1 bis 4, wobei das Heizelement (10) innerhalb einer äußeren Umhüllung (16) zumindest abschnittsweise in einem Isolator (20) eingebettet ist.

6. Vorrichtung nach Anspruch 5, wobei der Isolator (20) aus mineralischem Material besteht bzw. mineralisches Material aufweist.

7. Verfahren zum Betreiben einer Vorrichtung zur Füllstandsmessung in einem Flüssigkeitsbehälter
● mit einer Anzahl von Thermoelementen,
● und mit einem eine elektrische Leitung aufweisenden Heizelement, wobei die elektrische Leitung wenigstens einen eine Heizzone bildenden ersten Leitungsabschnitt und einen eine Kaltzone bildenden zweiten Leitungsabschnitt aufweist, wobei der erste Leitungsabschnitt einen wesentlich höheren spezifischen Widerstand besitzt als der zweite Leitungsabschnitt, und wobei die Temperaturabhängigkeit des spezifischen Widerstandes im zweiten Leitungsabschnitt wesentlich größer ist als im ersten Leitungsabschnitt,
bei dem der Gesamtwiderstand der elektrischen Leitung gemessen und anhand dieses Messwertes die Temperatur in der Umgebung des zweiten Leitungsabschnitts ermittelt wird.

8. Verfahren nach Anspruch 7, bei dem die ermittelte Temperatur für eine temperaturabhängige Heizstromregelung verwendet wird.

## Claims

1. A device for measuring the filling level in a liquid container,
● having a number of thermocouples,
● having a heating element including an electric line, said electric line including at least one first line section forming a heating zone and a second line section forming a cold zone, the first line section having a considerably higher resistivity that the second line section, and the temperature-dependence of the resistivity in the second line section being considerably higher than in the first line section,
● having means for measuring the overall resistance of the electric line,
● and having means which determine the temperature in the environment of the second line section by means of the measured overall resistance.

2. The device of claim 1, wherein the resistivity of the second line section depends approximately linearly on the temperature.

3. The device of claim 1 or 2, wherein the first line section (22) is formed by nickel chromium (NiCr).

4. The device of any of claims 1 to 3, wherein the second line section (24) is formed by nickel (Ni) or by a nickel alloy with a predominant share of nickel.

5. The device of any of claims 1 to 4, wherein the heating element (10) is embedded, at least in some sections, in an insulator (20) inside an outer cover.

6. The device of claim 5, wherein the insulator (20) consists of a mineral material or includes a mineral material.

7. A method for operating a device for measuring the filling level in a liquid container,
● having a number of thermocouples,
● having a heating element including an electric line, said electric line including at least one first line section forming a heating zone and a second line section forming a cold zone, the first line section having a considerably higher resistivity that the second line section, and the temperature-dependence of the resistivity in the second line section being considerably higher than in the first line section,
wherein the overall resistance of the electric line is measured and the temperature in the environment of the second line section is determined by means of this measured value.

8. The method of claim 7, wherein the determined temperature is used for a temperature-dependent heating-current regulation.

## Revendications

1. Dispositif pour mesurer le niveau de remplissage dans un réservoir à liquide,
● ayant un nombre de thermocouples,
● ayant un élément de chauffage comprenant une ligne électrique, dite ligne électrique comprenant au moins une première section de la ligne formant une zone de chauffage and une seconde section de la ligne formant une zone froide, la première section de la ligne ayant une résistivité considérablement plus élevée que la seconde section de la ligne, et la dépendance thermique de la résistivité dans la seconde section de la ligne étant considérablement plus élevée que dans la première section de la ligne,
● ayant des moyens pour mesurer la résistance totale de la ligne électrique,
● and ayant des moyens qui déterminent la température dans l'environnement de la seconde section de la ligne au moyen de la résistance totale mesurée.

2. Dispositif selon la revendication 1, dans lequel la résistivité de la seconde section de la ligne dépend de façon approximativement linéaire de la température.

3. Dispositif selon la revendication 1 ou 2, dans lequel la première section de la ligne (22) est formée par nickel-chrome (NiCr).

4. Dispositif selon l'une quelconque des revendications 1 à 3, dans lequel la seconde section de la ligne (24) est formée par nickel (Ni) ou par un alliage de nickel avec une part prédominante de nickel.

5. Dispositif selon l'une quelconque des revendications 1 à 4, dans lequel l'élément de chauffage (10) est encastré, au moins en quelques sections, dans un corps isolant (20) à l'intérieur d'une enveloppe extérieure.

6. Dispositif selon la revendication 5, dans lequel le corps isolant (20) consiste d'un matériau minéral ou comprend un matériau minéral.

7. Procédé pour faire fonctionner un dispositif pour mesurer le niveau de remplissage dans un réservoir à liquide,
● ayant un nombre de thermocouples,
● ayant un élément de chauffage comprenant une ligne électrique, dite ligne électrique comprenant au moins une première section de la ligne formant une zone de chauffage and une seconde section de la ligne formant une zone froide, la première section de la ligne ayant une résistivité considérablement plus élevée que la seconde section de la ligne, et la dépendance thermique de la résistivité dans la seconde section de la ligne étant considérablement plus élevée que dans la première section de la ligne,
dans lequel la résistance totale de la ligne électrique est mesurée et la température dans l'environnement de la seconde section de la ligne est déterminée au moyen de cette valeur mesurée.

8. Procédé selon la revendication 7, dans lequel la température déterminée est utilisée pour une régulation du courant de chauffage dépendante de la température.
